# EUROPEAN PATENT APPLICATION

(11) **EP 4 645 944 A1**
(43) Date of publication of application: **05.11.2025**
(21) Application number: 22969628.1
(22) Date of filing: 28.12.2022
(51) Int. Cl.: H04W 28/02, H04W 72/12, H04W 72/04

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: Gunzelmann, Rainer
(86) International application number: PCT/CN2022/143071
(87) International publication number: WO 2024/138477

(57) **Abstract**

Embodiments of the present disclosure relate to an information transmission method and apparatus, a communication device, and a storage medium. A user equipment (UE) sends a buffer status report, wherein the buffer status report is at least associated with scheduling assistance information, and the scheduling assistance information comprises a delay budget associated with uplink data.

## Description

### TECHNICAL FIELD

The disclosure relates to, but is not limited to, the field of wireless communication technology, and in particular to an information transmission method and an information transmission apparatus, a communication device, and a storage medium.

### BACKGROUND

A buffer status report is used by a user equipment (UE) to request uplink resources from an access network device such as a base station. The UE provides the base station with information about the amount of data to be transmitted in its uplink buffer using the buffer status report. In simpler terms, the buffer status report is a medium access control (MAC) layer message sent by the UE to the base station, as a notification that there is uplink data to be transmitted and to request the base station to allocate resources. The base station may allocate the uplink resources to the UE based on cell resource situations.

### SUMMARY

Accordingly, embodiments of the disclosure provide an information transmission method, an information transmission apparatus, a communication device, and a storage medium.

According to a first aspect of embodiments of the disclosure, an information transmission method is provided. The method is performed by a user equipment (UE), including: sending a buffer status report, in which the buffer status report is at least associated with scheduling assistance information, and the scheduling assistance information includes a delay budget associated with uplink data.

In an embodiment, the buffer status report carries the scheduling assistance information.

In an embodiment, the buffer status report carries N pieces of scheduling assistance information, each piece of scheduling assistance information is at least associated with one logic channel group (LCG), where N is less than or equal to a number of LCGs associated with the buffer status report.

In an embodiment, the buffer status report carries first extension indication information, the first extension indication information indicates whether at least one LCG of the buffer status report has corresponding scheduling assistance information.

In an embodiment, sending the buffer status report includes: determining that the delay budget is less than a preset threshold, and sending the buffer status report associated with the uplink data.

In an embodiment, the buffer status report is associated with a logic channel (LC) identifier (ID), and preset thresholds that are used for triggering the buffer status report and associated with different LC IDs are the same or different.

In an embodiment, the delay budget information includes a minimum value of delay budgets of uplink data of all LCs associated with the buffer status report.

In an embodiment, the buffer status report carries second extension indication information indicating an LCG associated with the delay budget.

In an embodiment, the method further includes: receiving enablement information sent by an access network device, in which the enablement information is configured to enable the buffer status report associated with the scheduling assistance information to take effect.

According to a second aspect of embodiments of the disclosure, an information transmission method is provided. The method is performed by an access network device, including: receiving a buffer status report, in which the buffer status report is at least associated with scheduling assistance information, and the scheduling assistance information includes a delay budget associated with uplink data.

In an embodiment, the buffer status report carries the scheduling assistance information.

In an embodiment, the buffer status report carries N pieces of scheduling assistance information, each piece of scheduling assistance information is at least associated with one LCG, where N is less than or equal to a number of LCGs associated with the buffer status report.

In an embodiment, the buffer status report carries first extension indication information, the first extension indication information indicates whether at least one LCG of the buffer status report has corresponding scheduling assistance information.

In an embodiment, the buffer status report is sent by a UE in a case that the UE determines that the delay budget is less than a preset threshold.

In an embodiment, the buffer status report is associated with an LC ID, and preset thresholds that are used for triggering the buffer status report and associated with different LC IDs are the same or different.

In an embodiment, the delay budget includes a minimum value of delay budgets of uplink data of all LCs associated with the buffer status report.

In an embodiment, the buffer status report carries second extension indication information indicating an LCG associated with the delay budget.

In an embodiment, the method further includes: sending enablement information to the UE, in which the enablement information is configured to enable the buffer status report associated with the scheduling assistance information to take effect.

According to a third aspect of embodiments of the disclosure, an information transmission apparatus is provided. The apparatus is applied to a UE, including: a transceiver module, configured to send a buffer status report, in which the buffer status report is at least associated with scheduling assistance information, and the scheduling assistance information includes a delay budget associated with uplink data.

In an embodiment, the buffer status report carries the scheduling assistance information.

In an embodiment, the buffer status report carries N pieces of scheduling assistance information, each piece of scheduling assistance information is at least associated with one LCG, where N is less than or equal to a number of LCGs associated with the buffer status report.

In an embodiment, the buffer status report carries first extension indication information, the first extension indication information indicates whether at least one LCG of the buffer status report has corresponding scheduling assistance information.

In an embodiment, the transceiver module is further configured to determine that the delay budget is less than a preset threshold, and send the buffer status report associated with the uplink data.

In an embodiment, the buffer status report is associated with an LC ID, and preset thresholds that are used for triggering the buffer status report and associated with different LC IDs are the same or different.

In an embodiment, the delay budget information includes a minimum value of delay budgets of uplink data of all LCs associated with the buffer status report.

In an embodiment, the buffer status report carries second extension indication information indicating an LCG associated with the delay budget.

In an embodiment, the transceiver module is further configured to receive enablement information sent by an access network device, in which the enablement information is configured to enable the buffer status report associated with the scheduling assistance information to take effect.

According to a fourth aspect of embodiments of the disclosure, an information transmission apparatus is provided. The apparatus is applied to an access network device, including: a transceiver module, configured to receive a buffer status report, in which the buffer status report is at least associated with scheduling assistance information, and the scheduling assistance information includes a delay budget associated with uplink data.

In an embodiment, the buffer status report carries the scheduling assistance information.

In an embodiment, the buffer status report carries N pieces of scheduling assistance information, each piece of scheduling assistance information is at least associated with one LCG, where N is less than or equal to a number of LCGs associated with the buffer status report.

In an embodiment, the buffer status report carries first extension indication information, the first extension indication information indicates whether at least one LCG of the buffer status report has corresponding scheduling assistance information.

In an embodiment, the buffer status report is sent by a UE in a case that the UE determines that the delay budget is less than a preset threshold.

In an embodiment, the buffer status report is associated with an LC ID, and preset thresholds that are used for triggering the buffer status report and associated with different LC IDs are the same or different.

In an embodiment, the delay budget includes a minimum value of delay budgets of uplink data of all LCs associated with the buffer status report.

In an embodiment, the buffer status report carries second extension indication information indicating an LCG associated with the delay budget.

In an embodiment, the transceiver module is further configured to send enablement information to the UE, in which the enablement information is configured to enable the buffer status report associated with the scheduling assistance information to take effect.

According to a fifth aspect of embodiments of the disclosure, a communication device is provided. The communication device includes a processor; and a memory configured to store instructions executable by the processor; in which the processor is configured to: perform the information transmission method according to the first aspect or the second aspect when executing the instructions.

According to a sixth aspect of embodiments of the disclosure, a computer storage medium is provided. The computer storage medium stores a computer-executable program which, when executed by a processor, implements the information transmission method the first aspect or the second aspect.

Embodiments of the disclosure provide an information transmission method, an information transmission apparatus, a communication device, and a storage medium. The UE sends the buffer status report, in which the buffer status report is at least associated with the scheduling assistance information, and the scheduling assistance information includes the delay budget associated with the uplink data. In this way, by sending the buffer status report associated with the scheduling assistance information, resource scheduling based on the delay budget requirement of the uplink data is realized. On one hand, flexibility of sending the buffer status report is improved since it is no longer limited to sending the buffer status report based on a data priority. On the other hand, transmission time limit requirements for the uplink data can be satisfied.

It should be understood that the above general description and the following detailed description are only exemplary and explanatory, and do not limit embodiments of the disclosure.

### BRIEF DESCRIPTION OF THE DRAWINGS

The drawings described herein are incorporated into the specification and constitute a part of the disclosure, showing the principles of the disclosure that conform to the embodiments of the disclosure and are used to explain the embodiments of the disclosure together with the specification.
FIG. 1 is a schematic diagram illustrating a wireless communication system according to an embodiment.
FIG. 2 is a schematic diagram illustrating a structure of a buffer status report according to an embodiment.
FIG. 3 is a schematic diagram illustrating a structure of a buffer status report according to an embodiment.
FIG. 4 is a flow chart illustrating an information transmission method according to an embodiment.
FIG. 5 is a schematic diagram illustrating a structure of a buffer status report according to an embodiment.
FIG. 6 is a schematic diagram illustrating a structure of a buffer status report according to an embodiment.
FIG. 7 is a schematic diagram illustrating a structure of a buffer status report according to an embodiment.
FIG. 8 is a schematic diagram illustrating a structure of a buffer status report according to an embodiment.
FIG. 9 is a schematic diagram illustrating a structure of a buffer status report according to an embodiment.
FIG. 10 is a flow chart illustrating an information transmission method according to an embodiment.
FIG. 11 is a flow chart illustrating an information transmission method according to an embodiment.
FIG. 12 is a flow chart illustrating an information transmission method according to an embodiment.
FIG. 13 is a schematic diagram illustrating a structure of a buffer status report according to an embodiment.
FIG. 14 is a schematic diagram illustrating a structure of a buffer status report according to an embodiment.
FIG. 15 is a block diagram illustrating a user equipment (UE) according to an embodiment.
FIG. 16 is a block diagram illustrating a base station according to an embodiment.

### DETAILED DESCRIPTION

Reference will now be made in detail to the exemplary embodiments, examples of which are illustrated in the accompanying figures. When the following description refers to the accompanying figures, the same numerals in different figures refer to the same or similar elements unless otherwise indicated. The implementations described in the following exemplary embodiments do not represent all implementations consistent with the embodiments of the disclosure. Rather, they are merely examples of devices and methods consistent with some aspects of the embodiments of the disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of this embodiments of the present disclosure, the first message may also be referred to as the second information, and likewise the second information may be referred to as the first message. Depending on the context, the words "if" and "in a case" used here may be interpreted as "when" or "in response to determining".

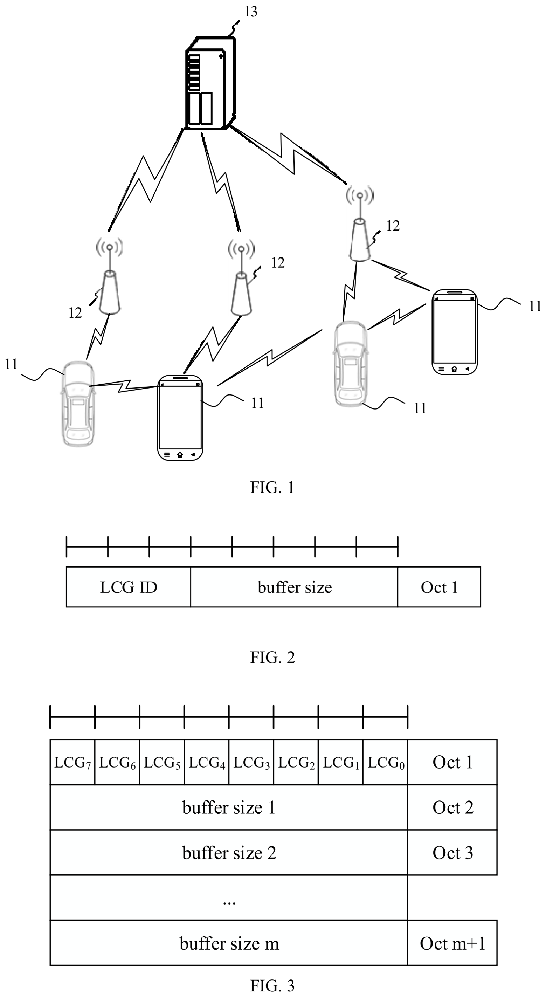

Referring to FIG. 1, which is a schematic diagram illustrating a wireless communication system according to an embodiment of the disclosure. As shown in FIG. 1, the wireless communication system is a communication system based on the cellular mobile communication technology, and the wireless communication system may include a plurality of terminals 11 and a plurality of base stations 12.

The terminal 11 may be a device that provides voice and/or data connectivity to users. The terminal 11 may communicate with one or more core networks via a radio access network (RAN). The terminal 11 may be an Internet of Things (IoT) terminal, such as a sensor device, a mobile phone (or a "cellular" phone), and a computer with an IoT terminal. For example, it may be a fixed, portable, pocket-sized, handheld, computer-built-in or vehicle-mounted device. For example, it may be a station (STA), a subscriber unit, a subscriber station, a mobile station, a mobile station, a remote station, an access point, a remote terminal, an access terminal, a user terminal, a user agent, a user device, or a user equipment (UE). Optionally, the terminal 11 may also be a device of an unmanned aerial vehicle. Optionally, the terminal 11 may also be a vehicle-mounted device, for example, it may be a driving computer with a wireless communication function, or a wireless communication device externally connected to the driving computer. Optionally, the terminal 11 may also be a roadside device, for example, a street lamp, a signal lamp or other roadside devices with a wireless communication function.

The base station 12 may be a network side device in the wireless communication system. The wireless communication system may be a fourth generation mobile communication (4G) system, also known as a long term evolution (LTE) system; or, the wireless communication system may be a 5G system, also known as a new radio (NR) system or a 5G NR system. Optionally, the wireless communication system may be a next generation system of the 5G system. The access network in the 5G system may be referred to as new generation-radio access network (NG-RAN). Optionally, the wireless communication system may be a machine type communication (MTC) system.

The base station 12 may be an evolved access device (eNB) adopted in the 4G system. Optionally, the base station 12 may also be an access device (gNB) adopting a centralized distributed architecture in the 5G system. When the base station 12 adopts the centralized distributed architecture, it usually includes a central unit (CU) and at least two distributed units (DUs). The central unit is provided with a protocol stack including a packet data convergence protocol (PDCP) layer, a radio link layer control protocol (RLC) layer, and a media access control (MAC) layer; the distributed unit is provided with a protocol stack including a physical (PHY) layer. The specific implementation of the base station 12 is not limited in the embodiments of the present disclosure.

A wireless connection may be established between the base station 12 and the UE 11 through a wireless air interface. In different implementations, the wireless air interface is a wireless air interface based on a fourth generation mobile communication network technology (4G) standard; or, the wireless air interface is a wireless air interface based on a fifth generation mobile communication network technology (5G) standard, for example, the wireless air interface is a new radio interface; or, the wireless air interface may also be a wireless air interface based on a next generation mobile communication network technology standard of the 5G standard.

In some embodiments, an E2E (End to End) or D2D (device to device) connection may be established between terminals 11, for example, in scenarios such as V2V (vehicle to vehicle) communication, V2I (vehicle to Infrastructure) communication and V2P (vehicle to pedestrian) communication in vehicle to everything (V2X) communication.

In some embodiments, the wireless communication system may also include a network management device 130.

Several base stations 12 are each connected to the network management device 130. The network management device 130 may be a core network device in the wireless communication system. For example, the network management device 130 may be a mobility management entity (MME) in an evolved packet core (EPC) network. Alternatively, the network management device may be other core network devices, such as a serving gateway (SGW), a public data network gateway (PGW), a policy and charging rules function unit (PCRF), or a home subscriber server (HSS). The implementation form of the network management device 130 is not limited in embodiments of the disclosure.

In order to facilitate understanding of those skilled in the art, the embodiments of the present disclosure provide multiple implementations to clearly illustrate the technical solution of the embodiments of the present disclosure. Of course, those skilled in the art may understand that the multiple embodiments provided by the embodiments of the present disclosure may be implemented separately, or may be implemented together with the methods of other embodiments of the embodiments of the present disclosure, or may be implemented together with some methods in the related art separately or in combination, which is not limited in the embodiments of the present disclosure.

The format of buffer status report may include: a short buffer status report reporting format shown in FIG. 2 and a long buffer status report reporting format shown in FIG. 3.

As shown in FIG. 2, the short buffer status report reporting format may be used to report a buffer data amount (also called buffer size) of one logical channel group (LCG), commonly referred to as the short-format buffer status report or the short-format truncated buffer status report. In the embodiments, it is abbreviated as the short buffer status report. The LCG ID refers to the logical channel group identifier.

As shown in FIG. 3, the long buffer status report reporting format may be used to report a buffer size of a plurality of LCGs, commonly referred to as the long-format buffer status report or the long-format truncated buffer status report. In the embodiments, it is abbreviated as the long buffer status report.

In communication services such as extended reality (XR), data typically consists of a plurality of QoS flows with very large traffic volumes. An XR data flow needs to satisfy specific latency requirements during transmission, particularly certain data flows need to arrive at a server simultaneously for decoding. Delay in any single data flow may cause failure of joint decoding of the plurality of data flows. Currently, the buffer status report is sent only upon arrival of high-priority data, but the XR data flow do not necessarily have a high priority. Consequently, urgent scheduling requirements cannot be met.

Thus, for services like XR where data has scheduling time-limited requirements, how to implement scheduling to fulfill the time-limited requirements of data scheduling is an urgent problem to be solved.

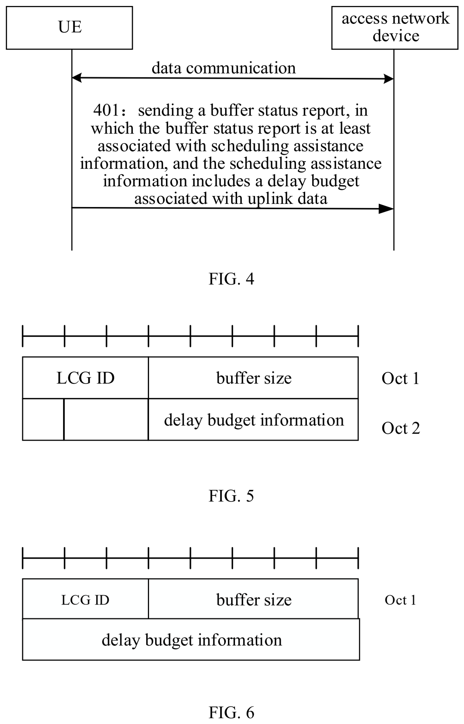

As shown in FIG. 4, the embodiments of the disclosure provide an information transmission method. The method may be performed by a UE, including the following step 401.

At step 401, a buffer status report is sent, in which the buffer status report is at least associated with scheduling assistance information, and the scheduling assistance information includes a delay budget associated with uplink data.

Here, the delay budget may be used to represent an allowed time of delay during data transmission. The delay budget may also adopt other names, which is not limited herein.

In a possible implementation, the delay budget may include: an upper time limit for possible delay of packets between a UE and an N6 termination point at a user plane function (UPF). The N6 is an interface between the UPF and an uplink data demand end. The N6 termination point may include: an uplink data demand end connected to the UPF through the N6 interface.

In a possible implementation, the delay budget includes at least one of: a remaining packet delay budget (PDB); or a remaining packet set delay budget (PSDB).

The scheduling assistance information may be information associated with the delay budget, including but not limited to an indication or information for calculating the delay budget. The scheduling assistance information may also adopt other names, which is not limited herein, for example, Delay Info. In a possible implementation, the delay budget may include: a current remaining delay budget. For example, for specific uplink data, a total delay budget is X; after the uplink data is transmitted through one or more network nodes (such as network elements), the current remaining delay budget is Y, where Y is less than or equal to X.

The uplink data includes but is not limited to data flows of the XR service.

The access network device may determine an allowed delay of the uplink data based on the delay budget, and configure uplink resources for the uplink data based on the delay to meet requirements of the uplink data. The access network device includes but is not limited to a base station.

In a possible implementation, the buffer status report is associated with the uplink data. For example, a buffer size reportable in the buffer status report is a buffer size of the uplink data.

In a possible implementation, the buffer status report being at least associated with the scheduling assistance information may include but is not limited to at least one of: the buffer status report at least carrying the scheduling assistance information; or the buffer status report being sent based at least on the scheduling assistance information.

Here, a buffer status report sent based on a priority of the uplink data may be a first-type buffer status report, and the first-type buffer status report may be different from a second-type buffer status report that is at least associated with the scheduling assistance information in the embodiments.

The first-type buffer status report being different from the second-type buffer status report may include but is not limited to at least one of: fields carried in the first-type buffer status report being different from fields carried in the second-type buffer status report; for example, the first-type buffer status report may carry the scheduling assistance information; or a condition for triggering the first-type buffer status report being different from a condition for triggering the second-type buffer status report; for example, the condition for triggering the first-type buffer status report may be a priority condition of the uplink data, and the condition for triggering the second-type buffer status report may be an upper delay limit of the uplink data.

In a possible implementation, sending the buffer status report may include: sending the buffer status report before a transmission time of the uplink data.

In a possible implementation, the buffer status report may be triggered based on a delay budget for transmitting the uplink data. For example, sending of the buffer status report may be triggered when the delay budget of the uplink data is less than a preset threshold.

In a possible implementation, the access network device may determine the delay budget of the uplink data based on the scheduling assistance information, and schedule corresponding uplink resources for the uplink data.

In this way, by sending the buffer status report associated with the scheduling assistance information, resource scheduling based on the delay budget requirements of the uplink data is implemented. On one hand, it is no longer limited to sending the buffer status report based on the data priority, thus improving flexibility of sending the buffer status report. On the other hand, transmission time limit requirements for the uplink data may be met.

In an embodiment, the buffer status report carries the scheduling assistance information.

As shown in FIG. 5 and FIG. 6, taking a short buffer status report as an example, a buffer status report may carry a buffer size of uplink data and may also carry the scheduling assistance information (that is, delay budget information) indicating a delay budget of the uplink data. As shown in FIG. 5, within one byte, the scheduling assistance information occupies 5 bits, and 3 bits may be used to carry other information or be reserved. As shown in FIG. 6, within one byte, the scheduling assistance information occupies 8 bits. Here, a quantity of bits occupied by the scheduling assistance information is not limited.

The buffer status reports shown in FIG. 5 and FIG. 6 are only for illustrating how the buffer status report carries information such as the buffer size and the scheduling assistance information. A length of the format and an information carrying manner are merely examples; a specific format of the buffer status report is not limited in the embodiments of the disclosure.

In a possible implementation, the scheduling assistance information may be carried in a "Delay info" field of the buffer status report to indicate the delay budget.

In an embodiment, the buffer status report carries N pieces of scheduling assistance information, each piece of scheduling assistance information is at least associated with one LCG, where N is less than or equal to a number of LCGs associated with the buffer status report.

In a possible implementation, the scheduling assistance information may be correspondingly set after the buffer size of the LCG.

For example, one piece of scheduling assistance information may correspond to one LCG. For a short buffer status report, one piece of scheduling assistance information may be carried. For a long buffer status report, a plurality of pieces of scheduling assistance information may be carried, and each piece of scheduling assistance information may correspond to one LCG. Among a plurality of LCGs in the long buffer status report, some LCGs may not have corresponding scheduling assistance information.

For example, one piece of scheduling assistance information may correspond a plurality of LCGs. For example, for a long buffer status report, one piece of scheduling assistance information may be carried in the long buffer status report and applied to a plurality of LCGs in the long buffer status report.

In a possible implementation, for a long buffer status report, I pieces of scheduling assistance information may be carried in the long buffer status report; each of i pieces of scheduling assistance information may correspond to a single LCG, and each of j pieces of scheduling assistance information may correspond to a plurality of LCGs, where I is a sum of i and j. The scheduling assistance information may include indication information indicating LCG(s) corresponding to the scheduling assistance information.

For example, as shown in FIG. 6, for a short buffer status report format, the buffer status report includes the scheduling assistance information, that is, the delay budget information.

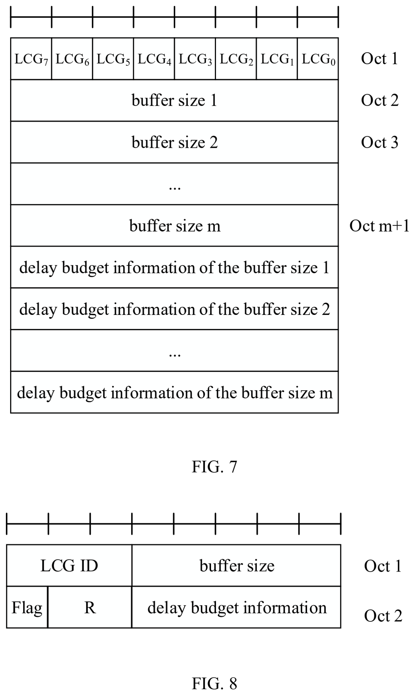

For example, as shown in FIG. 7, for a long buffer status report format, the long buffer status report format includes the delay budget information for each LCG that has a buffer status report reported. The buffer status report shown in FIG. 7 is only for illustrating how the buffer status report carries the buffer size and the scheduling assistance information. A length of the format and an information carrying manner are merely examples; a specific format of the buffer status report is not limited in the embodiments of the disclosure.

That is, if an LCGi is set to 1, while reporting the buffer size, the scheduling assistance information (that is, the delay budget information) for the buffer size is reported.

In an embodiment, the buffer status report carries first extension indication information, the first extension indication information indicates whether at least one LCG of the buffer status report has corresponding scheduling assistance information.

As shown in FIG. 8, taking a short buffer status report as an example, a buffer status report may carry the first extension indication information (flag). The first extension indication information may occupy one or more bits. The first extension indication information may indicate whether an LCG in the buffer status report carries a remaining PDB field, that is, whether the LCG has a corresponding delay budget. In FIG. 8, "flag" is a field name of the first extension indication information. In the embodiments, the field name of the first extension indication information is not limited.

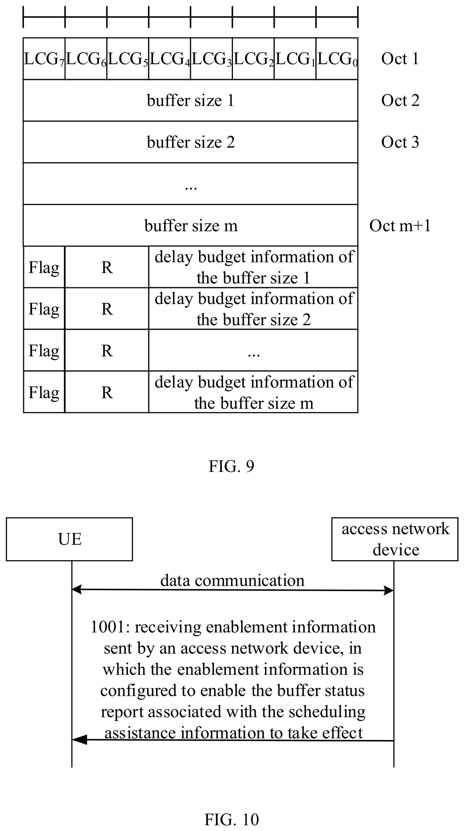

As shown in FIG. 9, taking a long buffer status report as an example, a buffer status report may carry a plurality of pieces of first extension indication information (flag). The first extension indication information may occupy one or more bits. The first extension indication information may indicate whether each LCG in the buffer status report carries a remaining PDB field, that is, whether the LCG has a corresponding delay budget. In FIG. 9, "flag" is a field name of the first extension indication information. In the embodiments, the field name of the first extension indication information is not limited.

The buffer status reports shown in FIG. 8 and FIG. 9 are only for illustrating how the buffer status report carries the buffer size, the scheduling assistance information, and the first extension indication information. A length of the format and an information carrying manner are merely examples; a specific format of the buffer status report is not limited in the embodiments of the disclosure.

In FIG. 8 and FIG. 9, the first extension indication information indicates whether the LCG carries the scheduling assistance information, such as a remaining PDB field. The first extension indication information may occupy at least one bit, and R represents a reserved bit. A quantity of reserved bits may be determined based on a quantity of bits occupied by the first extension indication information. The quantity of reserved bits may be one or more, or there may be no reserved bit.

In a possible implementation, the first extension indication information may indicate, by means of a bitmap or other manners, whether at least one LCG associated with the buffer status report has a corresponding delay budget.

The access network device may determine, based on the first extension indication information, whether at least one LCG has a corresponding delay budget, further determine the delay budget of the LCG, and configure uplink information for the LCG.

In an embodiment, sending the buffer status report includes: determining that the delay budget is less than a preset threshold, and sending the buffer status report associated with the uplink data.

Here, the delay budget may be an allowed sending delay of the uplink data.

In a possible implementation, the delay budget may be a current remaining delay budget, that is, a maximum allowed delay of the uplink data at a current time.

A smaller delay budget indicates higher urgency for transmission of the uplink data. Thus, when the delay budget is less than the preset threshold, it is required to send the buffer status report to the access network device to request uplink resources for transmitting the uplink data.

In a possible implementation, the buffer status report being at least associated with the scheduling assistance information may include: sending the buffer status report associated with the uplink data in case of determining that the delay budget is less than the preset threshold.

After receiving the buffer status report, the access network device may determine a scheduling urgency of the uplink data reported in the buffer status report and configure uplink resources for the uplink data.

Compared with sending the buffer status report based on a data priority, flexibility of sending the buffer status report may be improved, thereby meeting transmission requirements of different uplink data.

In a possible implementation, the preset threshold may be predetermined by a communication protocol.

In a possible implementation, the preset threshold may be notified to the UE by a network-side device such as an access network device through radio resource control (RRC) or media access control (MAC) control element (CE) signaling.

In a possible implementation, if the UE determines that the delay budget is greater than or equal to the preset threshold, the UE may determine whether to send the buffer status report associated with the uplink data based on a priority of the uplink data. The priority of the uplink data includes but is not limited to service priority, transmission priority, etc.

In an embodiment, the buffer status report is associated with an LC ID, and preset thresholds that are used for triggering the buffer status report and associated with different LC IDs are the same or different.

In a possible implementation, the buffer status report being associated with the LC ID may include: the buffer status report carries the LC ID.

The buffer status report may be sent based on a comparison result between a delay budget of data transmitted on the LC and a preset threshold corresponding to the LC. The buffer status report may carry the LC ID, and the LC ID is used to indicate an LC for which the sending of the buffer status report is triggered. That is, the buffer status report may use the LC ID to indicate the preset threshold for triggering the sending of the buffer status report.

For different LCs, the same preset threshold or different preset thresholds may be used.

For example, the network may configure a plurality of preset thresholds associated with different LC IDs. For example, a preset threshold 1 corresponds to an LC ID 1; a preset threshold 2 corresponds to an LC ID 2. When a delay budget of LC data is less than the preset threshold 1, a buffer status report is sent, and an LC ID of the LC ID 1 is associated in the buffer status report. For example, the LC ID 1 may be carried in the buffer status report.

When the access network device receives the buffer status report, the reported buffer status report may be associated with different LC IDs. Thus, the access network device may distinguish whether the report is triggered by the preset threshold 1 or the preset threshold 2, and thus determine the scheduling urgency of the uplink data based on the buffer status reports of different LCs reported by the UE.

In an embodiment, the delay budget information includes a minimum value of delay budgets of uplink data of all LCs associated with the buffer status report.

The buffer status report may report a buffer status of at least one LCG. One LCG may include at least one LC, and delay budgets of the uplink data transmitted on different LCs may differ. Here, a delay budget indicated by the scheduling assistance information carried in the buffer status report, and/or a delay budget used for comparison with the preset threshold, may be a minimum value of delay budgets of uplink data of all LCs associated with the buffer status report.

For example, the delay budget applies to reporting of the buffer status report including one LCG ID, in the buffer status report, the delay budget triggering the buffer status report may be a minimum PDB among PDBs on all LCs. All LCs include all LCs associated with the buffer status report, that is, all LCs within all LCGs indicated by LCG IDs in the buffer status report.

For example, reporting of the buffer status report is triggered for a plurality of LCs of an LCG, and a method for calculating the buffer size may be calculating based on a data amount calculation procedure, including a total amount of available data of all LCs in one LCG. A delay budget of the LCG is determined based on a minimum delay budget among all LCs (for example, a minimum value of delay budgets corresponding to uplink data to be transmitted on all LCs).

For the case where the delay budget information applies to reporting of the buffer status report including the plurality of LCG IDs, the delay budget may be a minimum delay budget among all LCs of all LCGs.

In this way, the buffer status report may at least meet scheduling time requirements of the most urgent uplink data, thus reducing the problem that excessive delay of the uplink data fails to meet service requirements.

In an embodiment, the buffer status report carries second extension indication information indicating an LCG associated with the delay budget.

For the case where the delay budget information applies to reporting of the buffer status report including the plurality of LCG IDs, the second extension indication information may be used to indicate the LCG associated with the delay budget, that is, indicate the LCG for which reporting of the buffer status report is triggered since the delay budget is less than the preset threshold.

In a possible embodiment, the second extension indication information may indicate, in a bitmap format, the LCG for which reporting of the buffer status report is triggered due to the delay budget.

For example, the buffer status report carries the scheduling assistance information and may notify the network in a bitmap format of those LCGs for which reporting of the buffer status report is triggered since the delay budgets is less than the preset threshold.

As shown in FIG. 10, the embodiments provide an information transmission method. The method may be performed by a UE, including the following step 1001.

At step 1001: enablement information sent by an access network device is received, in which the enablement information is configured to enable the buffer status report associated with the scheduling assistance information to take effect.

Here, the enablement information being configured to enable the buffer status report associated with the scheduling assistance information to take effect may indicate that the access network device notifying the UE that the buffer status report associated with the scheduling assistance information may be used for requesting uplink resources.

The access network device may send the enablement information to notify the UE that the buffer status report associated with the scheduling assistance information is acceptable to the access network device.

After receiving the enablement information, the UE sends the buffer status report associated with the scheduling assistance information. For example, the UE sends the buffer status report carrying the scheduling assistance information, and/or sends the buffer status report based on an indicated delay budget.

In a possible implementation, the enablement information may be targeted for one single LC or a plurality of LCs.

In an embodiment, in response to the enablement information being in granularity of LC and the LCG of the buffer status report being of a first configuration, the LCG includes LCs having the enablement information; or in response to the enablement information being in granularity of LC and the LCG of the buffer status report being of a second configuration, the LCG includes LCs having the enablement information and LCs without the enablement information.

In a possible implementation, the enablement information may be targeted for one single LC or a plurality of LCs.

The access network device may determine LCs included in the LCG based on a predetermined configuration.

When the predetermined configuration is a first value and the enablement information is targeted for a single LC, the access network device needs to configure LCs having the enablement information into a same LCG, and cannot configure LCs having the enablement information and LCs without the enablement information in a same LCG.

When the predetermined configuration is a second value and the enablement information is targeted for a single LC, the access network device may configure LCs having the enablement information and LCs without the enablement information in a same LCG; in this case, the LC without the enablement information may be considered to having an infinite delay budget.

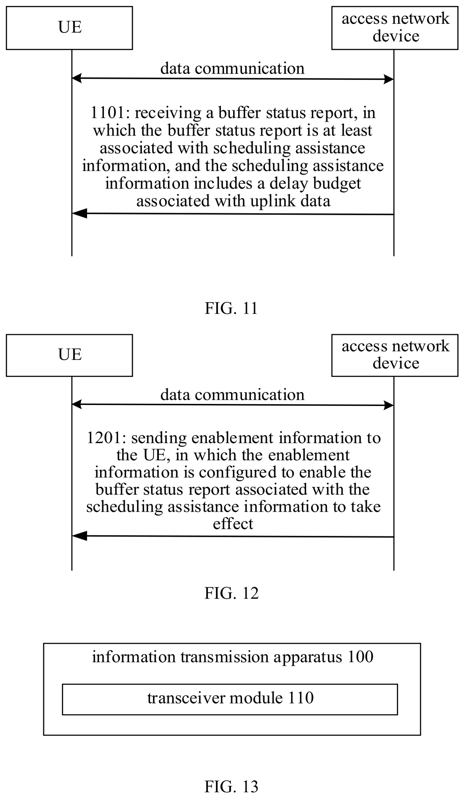

As shown in FIG. 11, the embodiments provide an information transmission method. The method may be performed by an access network device, including the following step 1101.

At step 1101, a buffer status report is received, in which the buffer status report is at least associated with scheduling assistance information, and the scheduling assistance information includes a delay budget associated with uplink data.

Here, the delay budget may be used to represent an allowed time of delay during data transmission. The delay budget may also adopt other names, which is not limited herein.

In a possible implementation, the delay budget may include: an upper time limit for possible delay of packets between a UE and an N6 termination point at a user plane function (UPF). The N6 is an interface between the UPF and an uplink data demand end. The N6 termination point may include: an uplink data demand end connected to the UPF through the N6 interface.

In a possible implementation, the delay budget includes at least one of: a remaining PDB; or a remaining PSDB.

The scheduling assistance information may be information associated with the delay budget, including but not limited to an indication or information for calculating the delay budget. The scheduling assistance information may also adopt other names, which is not limited herein, for example, Delay Info.

In a possible implementation, the delay budget may include: a current remaining delay budget. For example, for specific uplink data, a total delay budget is X; after the uplink data is transmitted through one or more network nodes (such as network elements), the current remaining delay budget is Y, where Y is less than or equal to X.

The uplink data includes but is not limited to data flows of the XR service.

The access network device may determine an allowed delay of the uplink data based on the delay budget, and configure uplink resources for the uplink data based on the delay to meet requirements of the uplink data. The access network device includes but is not limited to a base station.

In a possible implementation, the buffer status report is associated with the uplink data. For example, a buffer size reportable in the buffer status report is a buffer size of the uplink data.

In a possible implementation, the buffer status report being at least associated with the scheduling assistance information may include but is not limited to at least one of: the buffer status report at least carrying the scheduling assistance information; or the buffer status report being sent based at least on the scheduling assistance information.

Here, a buffer status report sent based on a priority of the uplink data may be a first-type buffer status report, and the first-type buffer status report may be different from a second-type buffer status report that is at least associated with the scheduling assistance information in the embodiments.

The first-type buffer status report being different from the second-type buffer status report may include but is not limited to at least one of: fields carried in the first-type buffer status report being different from fields carried in the second-type buffer status report; for example, the first-type buffer status report may carry the scheduling assistance information; or a condition for triggering the first-type buffer status report being different from a condition for triggering the second-type buffer status report; for example, the condition for triggering the first-type buffer status report may be a priority condition of the uplink data, and the condition for triggering the second-type buffer status report may be an upper delay limit of the uplink data.

In a possible implementation, sending the buffer status report may include: sending the buffer status report before a transmission time of the uplink data.

In a possible implementation, the buffer status report may be triggered based on a delay budget for transmitting the uplink data. For example, sending of the buffer status report may be triggered when the delay budget of the uplink data is less than a preset threshold.

In a possible implementation, the access network device may determine the delay budget of the uplink data based on the scheduling assistance information, and schedule corresponding uplink resources for the uplink data.

In this way, by sending the buffer status report associated with the scheduling assistance information, resource scheduling based on the delay budget requirements of the uplink data is implemented. On one hand, it is no longer limited to sending the buffer status report based on the data priority, thus improving flexibility of sending the buffer status report. On the other hand, transmission time limit requirements for the uplink data may be met.

In an embodiment, the buffer status report carries the scheduling assistance information.

As shown in FIG. 5 and FIG. 6, taking a short buffer status report as an example, a buffer status report may carry a buffer size of uplink data and may also carry the scheduling assistance information (that is, delay budget information) indicating a delay budget of the uplink data. As shown in FIG. 5, within one byte, the scheduling assistance information occupies 5 bits, and 3 bits may be used to carry other information or be reserved. As shown in FIG. 6, within one byte, the scheduling assistance information occupies 8 bits. Here, a quantity of bits occupied by the scheduling assistance information is not limited.

The buffer status reports shown in FIG. 5 and FIG. 6 are only for illustrating how the buffer status report carries information such as the buffer size and the scheduling assistance information. A length of the format and an information carrying manner are merely examples; a specific format of the buffer status report is not limited in the embodiments of the disclosure.

In a possible implementation, the scheduling assistance information may be carried in a "Delay info" field of the buffer status report to indicate the delay budget.

In an embodiment, the buffer status report carries N pieces of scheduling assistance information, each piece of scheduling assistance information is at least associated with one LCG, where N is less than or equal to a number of LCGs associated with the buffer status report.

In a possible implementation, the scheduling assistance information may be correspondingly set after the buffer size of the LCG.

For example, one piece of scheduling assistance information may correspond to one LCG. For a short buffer status report, one piece of scheduling assistance information may be carried. For a long buffer status report, a plurality of pieces of scheduling assistance information may be carried, and each piece of scheduling assistance information may correspond to one LCG. Among a plurality of LCGs in the long buffer status report, some LCGs may not have corresponding scheduling assistance information.

For example, one piece of scheduling assistance information may correspond a plurality of LCGs. For example, for a long buffer status report, one piece of scheduling assistance information may be carried in the long buffer status report and applied to a plurality of LCGs in the long buffer status report.

In a possible implementation, for a long buffer status report, I pieces of scheduling assistance information may be carried in the long buffer status report; each of i pieces of scheduling assistance information may correspond to a single LCG, and each of j pieces of scheduling assistance information may correspond to a plurality of LCGs, where I is a sum of i and j. The scheduling assistance information may include indication information indicating LCG(s) corresponding to the scheduling assistance information.

For example, as shown in FIG. 6, for a short buffer status report format, the buffer status report includes the scheduling assistance information, that is, the delay budget information.

For example, as shown in FIG. 7, for a long buffer status report format, the long buffer status report format includes the delay budget information for each LCG that has a buffer status report reported. The buffer status report shown in FIG. 7 is only for illustrating how the buffer status report carries the buffer size and the scheduling assistance information. A length of the format and an information carrying manner are merely examples; a specific format of the buffer status report is not limited in the embodiments of the disclosure.

That is, if an LCGi is set to 1, while reporting the buffer size, the scheduling assistance information (that is, the delay budget information) for the buffer size is reported.

In an embodiment, the buffer status report carries first extension indication information, the first extension indication information indicates whether at least one LCG of the buffer status report has corresponding scheduling assistance information.

As shown in FIG. 8, taking a short buffer status report as an example, a buffer status report may carry the first extension indication information (flag). The first extension indication information may occupy one or more bits. The first extension indication information may indicate whether an LCG in the buffer status report carries a remaining PDB field, that is, whether the LCG has a corresponding delay budget. In FIG. 8, "flag" is a field name of the first extension indication information. In the embodiments, the field name of the first extension indication information is not limited.

As shown in FIG. 9, taking a long buffer status report as an example, a buffer status report may carry a plurality of pieces of first extension indication information (flag). The first extension indication information may occupy one or more bits. The first extension indication information may indicate whether each LCG in the buffer status report carries a remaining PDB field, that is, whether the LCG has a corresponding delay budget. In FIG. 9, "flag" is a field name of the first extension indication information. In the embodiments, the field name of the first extension indication information is not limited.

The buffer status report shown in FIG. 8 and FIG. 9 are only for illustrating how the buffer status report carries the buffer size, the scheduling assistance information, and the first extension indication information. A length of the format and an information carrying manner are merely examples; a specific format of the buffer status report is not limited in the embodiments of the disclosure.

In FIG. 8 and FIG. 9, the first extension indication information indicates whether the LCG carries the scheduling assistance information, such as a remaining PDB field. The first extension indication information may occupy at least one bit, and R represents a reserved bit. A quantity of reserved bits may be determined based on a quantity of bits occupied by the first extension indication information. The quantity of reserved bits may be one or more, or there may be no reserved bit.

In a possible implementation, the first extension indication information may indicate, by means of a bitmap or other manners, whether at least one LCG associated with the buffer status report has a corresponding delay budget.

The access network device may determine, based on the first extension indication information, whether at least one LCG has a corresponding delay budget, further determine the delay budget of the LCG, and configure uplink information for the LCG.

In an embodiment, the delay budget is sent by a UE in a case where the UE determines that the delay budget is less than a preset threshold.

Here, the delay budget may be an allowed sending delay of the uplink data.

In a possible implementation, the delay budget may be a current remaining delay budget, that is, a maximum allowed delay of the uplink data at a current time.

A smaller delay budget indicates higher urgency for transmission of the uplink data. Thus, when the delay budget is less than the preset threshold, it is required to send the buffer status report to the access network device to request uplink resources for transmitting the uplink data.

In a possible implementation, the buffer status report being at least associated with the scheduling assistance information may include: sending the buffer status report associated with the uplink data in case of determining that the delay budget is less than the preset threshold.

After receiving the buffer status report, the access network device may determine a scheduling urgency of the uplink data reported in the buffer status report and configure uplink resources for the uplink data.

Compared with sending the buffer status report based on a data priority, flexibility of sending the buffer status report may be improved, thereby meeting transmission requirements of different uplink data.

In a possible implementation, the UE determines that the delay budget is greater than or equal to the preset threshold. The UE may determine whether to send the buffer status report associated with the uplink data according to a priority of the uplink data. The priority of the uplink data includes but is not limited to service priority, transmission priority, etc.

In a possible implementation, the preset threshold may be predetermined by a communication protocol.

In a possible implementation, the preset threshold may be notified to the UE by a network-side device such as an access network device through RRC or MAC CE signaling.

In an embodiment, the buffer status report is associated with an LC ID, and preset thresholds that are used for triggering the buffer status report and associated with different LC IDs are the same or different.

In a possible implementation, the buffer status report being associated with the LC ID may include: the buffer status report carries the LC ID.

The buffer status report may be sent based on a comparison result between a delay budget of data transmitted on the LC and a preset threshold corresponding to the LC. The buffer status report may carry the LC ID, and the LC ID is used to indicate an LC for which the sending of the buffer status report is triggered. That is, the buffer status report may use the LC ID to indicate the preset threshold for triggering the sending of the buffer status report.

For different LCs, the same preset threshold or different preset thresholds may be used.

For example, the network may configure a plurality of preset thresholds associated with different LC IDs. For example, a preset threshold 1 corresponds to an LC ID 1; a preset threshold 2 corresponds to an LC ID 2. When a delay budget of LC data is less than the preset threshold 1, a buffer status report is sent, and the LC ID 1 is associated in the buffer status report. For example, the LC ID 1 may be carried in the buffer status report.

When the access network device receives the buffer status report, the reported buffer status report may be associated with different LC IDs. Thus, the access network device may distinguish whether the report is triggered by the preset threshold 1 or the preset threshold 2, and thus determine the scheduling urgency of the uplink data based on the buffer status reports of different LCs reported by the UE.

In an embodiment, the delay budget information includes a minimum value of delay budgets of uplink data of all LCs associated with the buffer status report.

The buffer status report may report a buffer status of at least one LCG. One LCG may include at least one LC, and delay budgets of the uplink data transmitted on different LCs may differ. Here, a delay budget indicated by the scheduling assistance information carried in the buffer status report, and/or a delay budget used for comparison with the preset threshold, may be a minimum value of delay budgets of uplink data of all LCs associated with the buffer status report.

For example, the delay budget applies to reporting of the buffer status report including one LCG ID, in the buffer status report, the delay budget triggering the buffer status report may be a minimum PDB among PDBs on all LCs. All LCs include all LCs associated with the buffer status report, that is, all LCs within all LCGs indicated by LCG IDs in the buffer status report.

For example, reporting of the buffer status report is triggered for a plurality of LCs of an LCG, and a method for calculating the buffer size may be calculating based on a data amount calculation procedure, including a total amount of available data of all LCs in one LCG. A delay budget of the LCG is determined based on a minimum delay budget among all LCs (for example, a minimum value of delay budgets corresponding to uplink data to be transmitted on all LCs).

For the case where the delay budget information applies to reporting of the buffer status report including the plurality of LCG IDs, the delay budget may be a minimum delay budget among all LCs of all LCGs.

In this way, the buffer status report may at least meet scheduling time requirements of the most urgent uplink data, thus reducing the problem that excessive delay of the uplink data fails to meet service requirements.

In an embodiment, the buffer status report carries second extension indication information indicating an LCG associated with the delay budget.

For the case where the delay budget information applies to reporting of the buffer status report including the plurality of LCG IDs, the second extension indication information may be used to indicate the LCG associated with the delay budget, that is, indicate the LCG for which reporting of the buffer status report is triggered since the delay budget is less than the preset threshold.

In a possible embodiment, the second extension indication information may indicate, in a bitmap format, the LCG for which reporting of the buffer status report is triggered due to the delay budget.

For example, the buffer status report carries the scheduling assistance information and may notify the network in a bitmap format of those LCGs for which reporting of the buffer status report is triggered since the delay budgets is less than the preset threshold.

As shown in FIG. 12, the embodiments provide an information transmission method. The method may be performed by an access network device, including the following step 1201.

At step 1201: enablement information is sent to a UE, in which the enablement information is configured to enable the buffer status report associated with the scheduling assistance information to take effect.

Here, the enablement information being configured to enable the buffer status report associated with the scheduling assistance information to take effect may indicate that the access network device notifying the UE that the buffer status report associated with the scheduling assistance information may be used for requesting uplink resources.

The access network device may send the enablement information to notify the UE that the buffer status report associated with the scheduling assistance information is acceptable to the access network device.

After receiving the enablement information, the UE sends the buffer status report associated with the scheduling assistance information. For example, the UE sends the buffer status report carrying the scheduling assistance information, and/or sends the buffer status report based on an indicated delay budget.

In a possible implementation, the enablement information may be targeted for one single LC or a plurality of LCs.

In an embodiment, in response to the enablement information being in granularity of LC and the LCG of the buffer status report being of a first configuration, the LCG includes LCs having the enablement information; or in response to the enablement information being in granularity of LC and the LCG of the buffer status report being of a second configuration, the LCG includes LCs having the enablement information and LCs without the enablement information.

In a possible implementation, the enablement information may be targeted for one single LC or a plurality of LCs.

The access network device may determine LCs included in the LCG based on a predetermined configuration.

When the predetermined configuration is a first value and the enablement information is targeted for a single LC, the access network device needs to configure LCs having the enablement information into a same LCG, and cannot configure LCs having the enablement information and LCs without the enablement information in a same LCG.

When the predetermined configuration is a second value and the enablement information is targeted for a single LC, the access network device may configure LCs having the enablement information and LCs without the enablement information in a same LCG; in this case, the LC without the enablement information may be considered to having an infinite delay budget.

The following provides a specific example in combination with any of the foregoing embodiments.
1. A solution for reporting a second-type buffer status report.

The second-type buffer status report is associated with the scheduling assistance information (first information), such as the delay budget information, for assisting timely data scheduling of a base station.

Optionally, an embodiment of the delay budget information is: a remaining delay budget, that is, a remaining packet delay budget or a remaining packet set delay budget.

2. The second-type buffer status report may adopt a method 1. If the second-type buffer status report carries the scheduling assistance information, it may be based on the following mechanism (explicit method).

Optionally, as shown in FIG. 8, the second-type buffer status report may carry a reported buffer size and may optionally carry remaining packet delay budget information of the data. An extension indication bit (first extension indication information) indicates whether the LCG carries a remaining PDB field (scheduling assistance information).

Optionally, in FIG. 8, the extension indication bit (flag) is indicated by one bit, and R represents a reserved bit.

Thus, when reporting a long buffer status report format, for reporting of the buffer size of a plurality of LCGs, some LCGs may carry the scheduling assistance information when reporting the buffer status report, while some LCGs may not carry the scheduling assistance information when reporting the buffer status report.

Optionally, the first information may be set for a buffer size (i.e., buffer data amount) of a single LCG. As shown in FIG. 8, each reported buffer size is followed by a first information field (one first information field for short-format buffer status report; a plurality of first information fields for long-format buffer status report). (Some LCGs may not carry the first information).

Optionally, the first information may be set for a buffer size (i.e., buffer data amounts) of a plurality of LCGs, that is, only one first information field is carried in each reported long buffer status report, applicable to the plurality of LCGs. Compared with reporting one piece of scheduling assistance information per LCG buffer size, signaling overhead may be saved.

Optionally, the second-type buffer status report may carry its reported buffer size and must carry a remaining delay budget of the data.

FIG. 6 and FIG. 7 show embodiments of two possible reporting formats of the second-type buffer status report.

As shown in FIG. 6, for a short buffer status report format (including one LCG), the scheduling assistance information (i.e., the delay budget information) is included.

As shown in FIG. 7, for a long buffer status report format (including a plurality of LCGs), the scheduling assistance information (i.e., the delay budget information) for each LCG with buffer status report reporting is mandatorily included. That is, if LCGi is set to 1, the buffer size must be reported, and the scheduling assistance information (i.e., the delay budget information) for that buffer size may be optionally reported.

3. The second-type buffer status report may adopt a method 2. If the second-type buffer status report does not carry the scheduling assistance information, it may be based on the following mechanism (implicit method).

For example: a conventional buffer status report reporting condition may be modified by adding a reporting condition: data exists in the LC or the LCG, and a remaining delay budget of the data is less than or equal to a preset threshold.

Optionally, the network may configure a plurality of preset thresholds for the method 2. To enable the network to identify which threshold triggered the report, different LC IDs may be associated in the packet header for differentiation when reporting the second-type buffer status report.

For example, the preset threshold 1; in this case, the second-type buffer status report is associated with a reserved new LC ID1.

For example, the preset threshold 2; in this case, the second-type buffer status report is associated with a reserved new LC ID2.

The reported buffer status report may be associated with different LC IDs. Thus, the base station may distinguish whether the report was triggered by the preset threshold 1 or the preset threshold 2, and thus determine a scheduling urgency from the report of the terminal.

The preset threshold may be protocol-agreed or notified to the terminal via the RRC or the MAC CE signaling. The MAC CE signaling may timely notify the terminal of configuration and changes to the preset threshold for reporting the second-type buffer status report based on the uplink buffer status of the terminal.

4. Determination of remaining packet delay budget information (first information).

Optionally, for a delay budget (remaining PDB) applied to reporting of the buffer status report of one LCG ID, the remaining PDB is calculated by selecting the minimum PDB among all LCs.

For example, for an LCG: if reporting of the buffer status report is triggered for a plurality of LCs included in the LCG, the method for calculating the buffer size for the LCG is: calculating a total amount of available data of all LCs in one LCG based on a data amount calculation procedure. Its PDB is determined according to the minimum PDB among all LCs (for example, the minimum value among PDBs corresponding to data to be transmitted on all LCs).

Optionally, for a delay budget (remaining PDB) applied to reporting of the buffer status report of a plurality of LCG IDs, the remaining PDB may be the minimum PDB among all LCs of all LCGs.

For example, for the remaining packet delay budget applied to reporting of the buffer status report of a plurality of LCG IDs, the remaining PDB may be the minimum PDB among all LCs of all LCGs.

5. The buffer status report may also indicate for which LCs or LCGs reporting of the remaining packet delay budget information (first information) is triggered.

For example, for the method 1, a field (e.g., first extension indication information) may be occupied to notify the network in bitmap format of those LCGs for which reporting of the buffer status report is triggered since the remaining delay budget is less than the preset threshold.

6. The base station notifies the terminal to use enablement scheduling assistance information for reporting via a dedicated signaling.

Optionally, configuration restrictions may exist: the base station cannot configure LCs having enablement scheduling assistance information reported and LCs not having the enablement scheduling assistance information reported in the same LCG.

Optionally, no configuration restriction exists: the base station may configure LCs having the enablement scheduling assistance information reported and LCs not having the enablement scheduling assistance information reported in the same LCG. In this case, the LC not having the enablement scheduling assistance information reported may be considered to having an infinite remaining PDB.

As shown in FIG. 13, the embodiments provide an information transmission apparatus 100. The apparatus is applied to a UE, including: a transceiver module 110.

The transceiver module 110 is configured to send a buffer status report, in which the buffer status report is at least associated with scheduling assistance information, and the scheduling assistance information includes a delay budget associated with uplink data.

In an embodiment, the buffer status report carries the scheduling assistance information.

In an embodiment, the buffer status report carries N pieces of scheduling assistance information, each piece of scheduling assistance information is at least associated with one LCG, where N is less than or equal to a number of LCGs associated with the buffer status report.

In an embodiment, the buffer status report carries first extension indication information, the first extension indication information indicates whether at least one LCG of the buffer status report has corresponding scheduling assistance information.

In an embodiment, the transceiver module is specifically configured to determine that the delay budget is less than a preset threshold, and send the buffer status report associated with the uplink data.

In an embodiment, the buffer status report is associated with an LC ID, and preset thresholds that are used for triggering the buffer status report and associated with different LC IDs are the same or different.

In an embodiment, the delay budget information includes a minimum value of delay budgets of uplink data of all LCs associated with the buffer status report.

In an embodiment, the buffer status report carries second extension indication information indicating an LCG associated with the delay budget.

In an embodiment, the transceiver module is further configured to receive enablement information sent by an access network device, in which the enablement information is configured to enable the buffer status report associated with the scheduling assistance information to take effect.

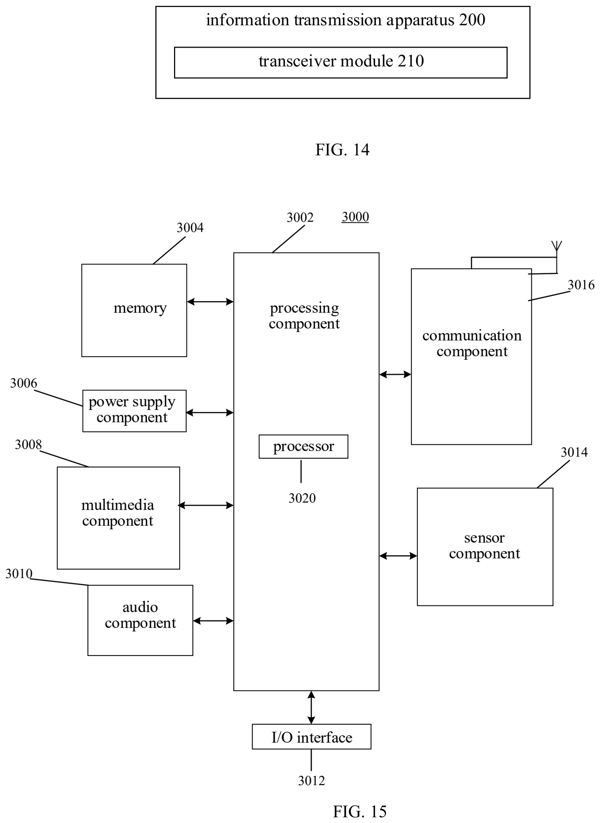

As shown in FIG. 14, the embodiments provide an information transmission apparatus 200. The apparatus is applied to an access network device, including: a transceiver module 210.

The transceiver module 210 is configured to receive a buffer status report, in which the buffer status report is at least associated with scheduling assistance information, and the scheduling assistance information includes a delay budget associated with uplink data.

In an embodiment, the buffer status report carries the scheduling assistance information.

In an embodiment, the buffer status report carries N pieces of scheduling assistance information, each piece of scheduling assistance information is at least associated with one LCG, where N is less than or equal to a number of LCGs associated with the buffer status report.

In an embodiment, the buffer status report carries first extension indication information, the first extension indication information indicates whether at least one LCG of the buffer status report has corresponding scheduling assistance information.

In an embodiment, the buffer status report is sent by a UE in a case that the UE determines that the delay budget is less than a preset threshold.

In an embodiment, the buffer status report is associated with an LC ID, and preset thresholds that are used for triggering the buffer status report and associated with different LC IDs are the same or different.

In an embodiment, the delay budget includes a minimum value of delay budgets of uplink data of all LCs associated with the buffer status report.

In an embodiment, the buffer status report carries second extension indication information indicating an LCG associated with the delay budget.

In an embodiment, the transceiver module is further configured to send enablement information to the UE, in which the enablement information is configured to enable the buffer status report associated with the scheduling assistance information to take effect.

Embodiments of the disclosure provide a communication device. The communication device includes: a processor; and a memory configured to store instructions executable by the processor; in which the processor is configured to: perform the information transmission method according to embodiments of the disclosure when executing the instructions.

In an embodiment, the communication device may include, but is not limited to, at least one of: a UE and a network device. Here, the network device may include a core network or an access network device, etc. Here, the access network device may include a base station; the core network may include an AMF, an SMF.

The processor may include various types of storage media that are non-transitory computer storage media capable of continuing to memorize information stored thereon after the communication device is powered down.

The processor may be connected to the memory through a bus or the like for reading an executable program stored on the memory, e.g., at least one method shown in FIG. 4, FIG. 10 to FIG. 12.

Embodiments of the disclosure further provide a computer storage medium. The computer storage medium stores a computer-executable program which, when executed by a processor, implements the information transmission method according to any embodiments of the disclosure, e.g., at least one method shown in FIG. 4, FIG. 10 to FIG. 12.

The specific ways in which the individual modules of the apparatuses and the storage medium in the above embodiments perform the operations have been described in detail in the embodiments relating to the method, and will not be illustrated in detail herein.

FIG. 15 is a block diagram illustrating UE 3000 according to an embodiment. For example, the UE 3000 may be a cell phone, a computer, a digital broadcasting terminal, a message transceiver device, a gaming console, a tablet device, a medical device, a fitness device, a personal digital assistant, etc.

Referring to FIG. 15, the UE 3000 may include one or more of the following components: a processing component 3002, a memory 3004, a power supply component 3006, a multimedia component 3008, an audio component 3010, an inputs/outputs interface (I/O) 3012, a sensor component 3014, and a communication component 3016.

The processing component 3002 generally controls the overall operation of the UE 3000, such as operations associated with displays, telephone calls, data communications, camera operations, and recording operations. The processing component 3002 may include one or more processors 820 to execute instructions to accomplish all or some of the steps of the method described above. Alternatively, the processing component 3002 may include one or more modules to facilitate interaction between the processing component 3002 and other components. For example, the processing component 3002 may include a multimedia module to facilitate interaction between the multimedia component 3008 and the processing component 3002.

The memory 3004 is configured to store various types of data to support operation at the device 3000. Examples of such data include instructions for any application or method operated on the UE 3000, contact data, phone book data, messages, pictures, videos, etc. The memory 3004 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD-ROM.

The power supply component 3006 provides power to the various components of the UE 3000. The power supply component 3006 may include a power management system, one or more power supplies, and other components associated with generating, managing, and distributing power for the UE 3000.

The multimedia component 3008 includes a screen providing an output interface between the UE 3000 and a user. In some embodiments, the screen may include a liquid crystal display (LCD) and a touch panel (TP). In case the screen includes a touch panel, the screen may be implemented as a touch screen to receive input signals from the user. The touch panel includes one or more touch sensors to sense touches, swipes, and gestures on the touch panel. The touch sensors may sense a boundary of a touch or swipe action, and detect a duration and pressure associated with the touch or swipe operation. In some embodiments, the multimedia component 3008 includes a front-facing camera and/or a rear-facing camera. The front camera and/or the rear camera may receive external multimedia data when the UE 3000 is in an operating mode, such as a shooting mode or a video mode. Each of the front camera and the rear camera may be a fixed optical lens system or have a focal length and optical zoom capability.

The audio component 3010 is configured to output and/or input audio signals. For example, the audio component 3010 includes a microphone (MIC) that is configured to receive external audio signals when the UE 3000 is in an operational mode, such as a call mode, a recording mode, and a voice recognition mode. The received audio signals may be further stored in the memory 3004 or sent in the communication component 3016. In some embodiments, the audio component 3010 further includes a speaker for outputting audio signals.

The I/O interface 3012 provides an interface between the processing component 3002 and a peripheral interface module, said peripheral interface module may be a keypad, a click wheel, buttons, etc. These buttons may include, but are not limited to: a home button, a volume button, a start button, and a lock button.

The sensor component 3014 includes one or more sensors for providing various aspects of status assessment for the UE 3000. For example, the sensor component 3014 may detect an open/closed state of the device 3000, the relative positioning of components, such as the components being the display and keypad of the UE 3000, the sensor component 3014 may also detect a change in the position of the UE 3000 or one of the components of the UE 3000, the presence or absence of user contact with the UE 3000, the orientation of the UE 3000 or acceleration/deceleration of the UE 3000, and the temperature change of the UE 3000. The sensor component 3014 may include a proximity sensor configured to detect the presence of a nearby object in the absence of any physical contact. The sensor component 3014 may also include an optical sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 3016 is configured to facilitate communication between the UE 3000 and other devices by wired or wireless means. The UE 3000 may access a wireless network based on a communication standard, such as Wi-Fi, 4G or 5G, or a combination thereof. In an exemplary embodiment, the communication component 3016 receives broadcast signals or broadcast-related information from an external broadcast management system in a broadcast channel. In an exemplary embodiment, the communication component 3016 further includes a near field communication (NFC) module to facilitate short-range communication. For example, in the NFC module may be implemented based on radio frequency identification (RFID) technology, infrared data association (IrDA) technology, ultra-wide band (UWB) technology, Bluetooth (BT) technology, and other technologies.

In exemplary embodiments, the UE 3000 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In exemplary embodiments, there is also provided a non-transitory computer-readable storage medium including instructions, such as a memory 3004 including instructions, the instructions being executable by a processor 3020 of the UE 3000 for accomplishing the above-described method. For example, the non-transitory computer-readable storage medium may be an ROM, a random access memory (RAM), a CD-ROM, magnetic tape, a floppy disks, and optical data storage devices, etc.

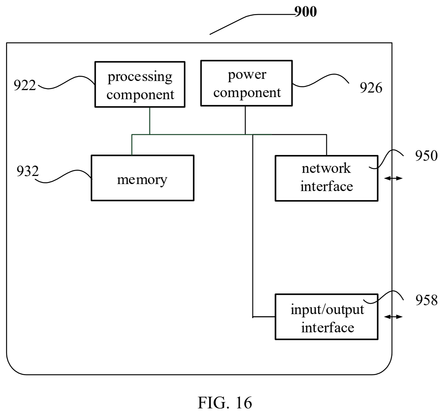

Referring to FIG. 16, an embodiment of the disclosure illustrates a structure of a base station. For example, the base station 900 may be provided as a network side device. Referring to FIG. 16, the base station 900 includes a processing component 922, which further includes one or more processors, and a memory resource represented by a memory 932 for storing instructions that may be executed by the processing component 922, such as an application program. The application program stored in memory 932 may include one or more modules each corresponding to a set of instructions. Alternatively, the processing component 922 is configured to execute the instructions to perform any of the methods applied to the base station as described in the foregoing method.

The base station 900 may also include a power component 926 configured to perform power management of the base station 900, a wired or wireless network interface 950 configured to connect the base station 900 to a network, and an input/output (I/O) interface 958. The base station 900 may operate an operating system based on the operating system stored in the memory 932, such as Windows Server ^{™}, Mac OS X^{™}, Unix^{™}, Linux^{™}, FreeBSD^{™}, or the like.

Other implementations of the embodiments of the disclosure will be readily apparent to those skilled in the art from consideration of the specification and practice of the disclosure disclosed herein. This application is intended to cover any modification, use or adaptation of the embodiments of the disclosure, these modifications, uses or adaptations follow the general principles of the embodiments of the disclosure and include those in the technical field not disclosed by the embodiments of the disclosure Common knowledge or common technical means. The specification and examples are to be considered exemplary only, with a true scope and spirit of the embodiments of the disclosure being indicated by the following claims.

It should be understood that the embodiments of the disclosure are not limited to the precise structures described above and shown in the drawings, and various modifications and changes may be made without departing from the scope thereof. The scope of embodiments of the disclosure is limited only by the appended claims.

## Claims

1. An information transmission method, performed by a user equipment (UE), comprising:
sending a buffer status report, wherein the buffer status report is at least associated with scheduling assistance information, and the scheduling assistance information comprises a delay budget associated with uplink data.

2. The method according to claim 1, wherein the buffer status report carries the scheduling assistance information.

3. The method according to claim 1, wherein the buffer status report carries N pieces of scheduling assistance information, each piece of scheduling assistance information is at least associated with one logic channel group (LCG), where N is less than or equal to a number of LCGs associated with the buffer status report.

4. The method according to claim 1, wherein the buffer status report carries first extension indication information, the first extension indication information indicates whether at least one LCG of the buffer status report has corresponding scheduling assistance information.

5. The method according to any one of claims 1 to 4, wherein sending the buffer status report comprises:
determining that the delay budget is less than a preset threshold, and sending the buffer status report associated with the uplink data.

6. The method according to claim 5, wherein the buffer status report is associated with a logic channel (LC) identifier (ID), and preset thresholds that are used for triggering the buffer status report and associated with different LC IDs are the same or different.

7. The method according to any one of claims 1 to 4, wherein the delay budget information comprises a minimum value of delay budgets of uplink data of all LCs associated with the buffer status report.

8. The method according to any one of claims 1 to 4, wherein the buffer status report carries second extension indication information indicating an LCG associated with the delay budget.

9. The method according to any one of claims 1 to 4, further comprising:
receiving enablement information sent by an access network device, wherein the enablement information is configured to enable the buffer status report associated with the scheduling assistance information to take effect.

10. An information transmission method, performed by an access network device, comprising:
receiving a buffer status report, wherein the buffer status report is at least associated with scheduling assistance information, and the scheduling assistance information comprises a delay budget associated with uplink data.

11. The method according to claim 10, wherein the buffer status report carries the scheduling assistance information.

12. The method according to claim 10, wherein the buffer status report carries N pieces of scheduling assistance information, each piece of scheduling assistance information is at least associated with one logic channel group (LCG), where N is less than or equal to a number of LCGs associated with the buffer status report.

13. The method according to claim 10, wherein the buffer status report carries first extension indication information, the first extension indication information indicates whether at least one LCG of the buffer status report has corresponding scheduling assistance information.

14. The method according to any one of claims 10 to 13, wherein
the buffer status report is sent by a user equipment (UE) in a case that the UE determines that the delay budget is less than a preset threshold.

15. The method according to claim 14, wherein the buffer status report is associated with a logic channel (LC) identifier (ID), and preset thresholds that are used for triggering the buffer status report and associated with different LC IDs are the same or different.

16. The method according to any one of claims 10 to 13, wherein the delay budget comprises a minimum value of delay budgets of uplink data of all LCs associated with the buffer status report.

17. The method according to any one of claims 10 to 13, wherein the buffer status report carries second extension indication information indicating an LCG associated with the delay budget.

18. The method according to any one of claims 10 to 13, further comprising:
sending enablement information to the UE, wherein the enablement information is configured to enable the buffer status report associated with the scheduling assistance information to take effect.

19. An information transmission apparatus, applied to a user equipment (UE), comprising:
a transceiver module, configured to send a buffer status report, wherein the buffer status report is at least associated with scheduling assistance information, and the scheduling assistance information comprises a delay budget associated with uplink data.

20. An information transmission apparatus, applied to an access network device, comprising:
a transceiver module, configured to receive a buffer status report, wherein the buffer status report is at least associated with scheduling assistance information, and the scheduling assistance information comprises a delay budget associated with uplink data.

21. A communication device, comprising:
a processor; and
a memory configured to store instructions executable by the processor;
wherein the processor is configured to: perform the information transmission method according to any one of claims 1 to 9 or claims 10 to 18 when executing the instructions.

22. A computer storage medium, storing a computer-executable program which, when executed by a processor, implements the information transmission method according to any one of claims 1 to 9 or claims 10 to 18.
